# EUROPÄISCHE PATENTSCHRIFT

(11) **EP 1 274 607 B1**
(45) Veröffentlichungstag und Bekanntmachung des Hinweises auf die Patenterteilung: **22.12.2004**
(21) Anmeldenummer: 02716757.6
(22) Anmeldetag: 09.02.2002
(51) Int. Cl.: B60R 16/02

(54) **LENKSÄULENMODUL**
STEERING COLUMN MODULE
MODULE DE COLONNE DE DIRECTION

(30) Priorität: 16.02.2001 DE 10108377
(43) Veröffentlichungstag der Anmeldung: 15.01.2003
(73) Patentinhaber: Leopold Kostal GmbH & Co. KG, 58507 Lüdenscheid (DE)
(72) Erfinder: HIRSCHFELD, Klaus, 58515 Lüdenscheid (DE); LETTMANN, Holger, 58840 Plettenberg (DE); ADAM, Markus, 57462 Olpe (DE)
(86) Internationale Anmeldenummer: PCT/EP2002/001384
(87) Internationale Veröffentlichungsnummer: WO 2002/066294

(56) Entgegenhaltungen:
- DE-A- 19 649 906
- DE-C- 19 914 653
- DE-U- 29 805 002
- US-A- 5 990 574

## Beschreibung

Die Erfindung geht von einem die Merkmale des Oberbegriffs der unabhängigen Ansprüche 1 und 2 aufweisenden Lenksäulenmodul aus.

Eine gattungsgemäße Vorrichtung ist aus der Deutschen Gebrauchsmuster-Veröffentlichung DE-U-298 05 002 bekannt, wobei hierin als mögliche Funktionseinheiten mechanoelektrische Wandler-Mikroschalter, ein Drehwinkelsensor, ein Drehmomentsensor, eine Wegfahrsperre oder der Empfänger einer Hochfrequenzfunkfemsteuerung offenbart sind.

Ein Lenkrad, welches ein Elektronikmodul sowie mehrere Bedien- und/oder Funktionsmodule aufweist, ist auch aus der Deutschen Patentschrift DE-C-199 14 653 bekannt.

Derartige Lenksäulenmodule sind in Kraftfahrzeugen dafür vorgesehen, um verschiedene Funktionen - wie z.B. die Fahrtrichtungsanzeige oder Wisch-Wasch-Vorgänge bzw. Signalübertragungen oder die Lenkwinkelerfassung auszulösen bzw. zu realisieren.

In einem herkömmlichen Aufbau sind die unterschiedlichen Funktionseinheiten als separate elektronische oder elektro-mechanische Module ausgebildet, welche in verschiedenen axialen Ebenen entlang der Lenkachse angeordnet sind, wobei die Module die Lenksäule auch konzentrisch umgreifen können.

Die Funktionseinheiten umfassen beispielsweise eine Wickelfederkassette zur Stromversorgung und Signalübertragung in das Lenkrad, einen Lenkwinkelsensor zur Erfassung des Lenkeinschlages sowie verschiedene Lenkstockschalterkomponenten, welche den unterschiedlichen Bedienfunktionen, wie etwa Fahrtrichtungsanzeige, der Scheibenwisch-Funktion etc., zugeordnet sind.

Den unterschiedlichen Funktionseinheiten ist weiterhin eine Elektronikeinheit zugeordnet, welche eine Leiterplatte enthält auf der u.a. die Leistungs-, Auswerte- und gegebenenfalls Steuerungselektronik der Funktionseinheiten angeordnet ist und welche die verschiedenen Funktionseinheiten mit dem Bordnetz verbindet. Für die Kontaktierung der verschiedenen Funktionseinheiten mit der Elektronikeinheit sind dabei lösbare Steckverbinder vorgesehen.

Die Elektronikeinheit bildet bei einer vorbekannten Ausgestaltung, wie beispielsweise aus der EP 0 853 022 A1 bekannt, eine eigene Ebene in dem Aufbau des Lenksäulenmoduls und ist somit in den schichtigen Aufbau des Lenksäulenmoduls integriert. Bei dieser vorbekannten Ausgestaltung bildet die Elektronikeinheit eine unterste Ebene, auf der in einer ersten darüberliegenden Ebene mehrere eine Funktionseinheit bildende Lenkstockschalter angeordnet sind. Eine unmittelbare Kontaktierung zwischen den Schaltern und der Elektronikeinheit ist infolge der benachbarten Anordnung ohne weiteres möglich. In einer weiteren Ebene oberhalb der Ebene der Lenkstockschalter ist eine ebenfalls eine Funktionseinheit darstellende Wickelfederkassette angeordnet. Damit diese ebenfalls mit der Elektronikeinheit verbunden werden kann, weist diese einen länglichen Fortsatz auf, der durch die Anordnung der Lenkstockschalter hindurch bis in die Ebene der Elektronikeinheit hindurchgreift, um in ein darin befindliches Steckverbinderteil eingeführt werden zu können.

Bei diesem vorbekannten Lenksäulenmodul können zwar prinzipiell mehrere Funktionseinheiten angeordnet und in unterschiedlichen Ebenen elektrisch kontaktiert werden, jedoch bedarf es eines Durchgriffes der nicht unmittelbar an das Elektronikmodul grenzenden Funktionseinheiten durch die anderen.

Durch diese geschichtete Anordnung der Funktionseinheiten sind daher unterschiedlich lange Leitungswege zu den verschiedenen Modulen bedingt. Insbesondere bei Lenksäulenmodulen, welche viele funktionale Schichten enthalten, wird die am weitesten von der Elektronikeinheit entfernteste Funktionseinheit durch vergleichsweise lange Kontaktfahnen mit der Elektronikeinheit verbunden. Für Funktionseinheiten, bei denen z.B. hinsichtlich ihres Spannungs- oder Strompegels sehr geringe Signale übertragen werden - dies ist beispielsweise beim Lenkwinkelsensor der Fall - können daher elektromagnetische Einstreuungen in die Leiterbahnen Störungen verursachen und damit die Funktionssicherheit der Einheit beeinträchtigen.

Die Betriebssicherheit der durch Steckverbinder kontaktierten Funktionseinheiten kann weiterhin, insbesondere nach vielen Betriebsjahren und bei ungünstigen Umgebungsbedingungen, wie einem hohem Luftfeuchtigkeitsgehalt der Umgebung, beispielsweise durch eine Oxidation der Kontakte, negativ beeinträchtigt werden.

Dies macht die Verwendung von besonders hochwertigen, beispielsweise vergoldeten und/oder speziell gekapselten Steckkontakten notwendig, welche auf der anderen Seite jedoch sehr kostenintensiv sind.

Es ist daher Aufgabe der vorliegenden Erfindung, ein Lenksäulenmodul zu schaffen, welches insbesondere für störempfindliche elektronische Funktionseinheiten lange Verbindungswege vermeidet, eine hohe Betriebssicherheit und einen kompakten modularen Aufbau aufweist und dabei kostengünstig zu realisieren ist.

Diese Aufgabe wird erfindungsgemäß jeweils durch die in den kennzeichnenden Teilen der unabhängigen Ansprüche 1 und 2 angegebenen Merkmale gelöst.

Besonders günstig bei einem derartigen Aufbau ist die Kombination der Vorteile eines modularen Aufbaus des Lenksäulenmoduls, bezüglich der Flexibilität und Wartungsfreundlichkeit der einzelnen Komponenten, mit den Vorteilen, welche sich durch Integration von störempfindlichen Funktionseinheiten zu Baueinheiten ergeben.

In dem erfindungsgemäßen Lenksäulenmodul wird eine störempfindliche Funktionseinheit mit der Elektronikeinheit in einem gemeinsamen Gehäuse zu einer untrennbaren kompakten Baueinheit zusammengefaßt, wobei die Elektronik- und Funktionseinheit unlösbar, elektrisch leitend miteinander verbunden sind.

Die unlösbare Verbindung wird dadurch hergestellt, daß die elektronischen Komponenten der Funktionseinheit und die damit kooperierenden Komponenten der Elektronikeinheit auf einem gemeinsamen, nichtleitenden und mit elektrischen Leiterbahnen versehenen Substrat angeordnet sind. Das Substrat kann beispielsweise eine Leiterplatte sein oder eine flexible Folie.

Zweckmäßigerweise ist die in die Baueinheit integrierte Funktionseinheit ein Lenkwinkelsensor, wobei dieser quer zur Lenkachse und diese zumindest partiell umgreifend angeordnet ist und wobei die integrierte Elektronikeinheit vorzugsweise parallel zur Lenkachse angeordnet ist. Durch diese Art der Anordnung ergibt sich im wesentlichen ein gewinkelter L-förmiger Aufbau. Das Leiterbahnen tragende Substrat ist dabei ebenfalls gewinkelt ausgeführt.

Ist das Substrat in Form einer Leiterplatte ausgeführt, kann die gewinkelte Ausführung der Leiterplatte dadurch erreicht werden, daß die Leiterplatte auf der den Leiterbahnen abgewandten Seite auf eine Dicke von typischerweise einigen zehntel Millimeter geschwächt wird - dies kann durch eine mechanische Einfräsung bewirkt werden - , so daß die Leiterplatte umgeklappt werden kann, ohne daß es zu einem Bruch des Plattenmaterials kommt.

In einer alternativen Ausführungsform ist das Substrat als eine flexible Folie ausgeführt, welche problemlos abgewinkelt werden kann. Vorzugsweise stützt sich die Leiterbahnfolie dabei auf einer im Gehäuse angebrachten Stützkonstruktion ab, welche in den beiden Schenkeln des L-förmigen Aufbaus angebracht ist.

In einer weiteren bevorzugten Ausführungsform sind an dem die Elektronikeinheit aufnehmenden Schenkel des L-förmig gewinkelten Aufbaus an der zur Lenkachse weisenden Seite bezüglich der Steckrichtung in radialer oder tangentialer Richtung weisende Steckverbindungsteile angebracht, so daß weitere Funktionseinheiten auf kurzem Wege an diesen Schenkel über korrespondierende steckbare Verbindungsteile angeschlossen werden können. Weitere Funktionseinheiten, welche beispielsweise weniger störempfindlich sind, können gegebenenfalls auch über längere Leitungswege mit axialer Steckrichtung angeschlossen werden.

In einer weiteren erfindungsgemäßen Ausführung des Lenksäulenmoduls wird eine zweite störempfindliche Funktionseinheit zusammen mit der Elektronikeinheit und der ersten Funktionseinheit zu einer untrennbaren, im wesentlichen U-förmig ausgeführten Baugruppe vereinigt, wobei der mittlere Teil parallel zur Lenkachse angeordnet ist. Die zweite Funktionseinheit kann beispielsweise ein Drehmomentsensor sein. Auch bei dieser Anordnung wird die Elektronikeinheit mit der ersten und der zweiten Funktionseinheit direkt und unlösbar über Leitungen verbunden, wobei die Leitungen auf einen gemeinsamen Substrat angebracht sind, welches in U-Form abgewinkelt ist und sich in allen Teilen des U-förmigen Gehäuses erstreckt. Die den integrierten Funktionseinheiten zugeordneten Schenkel der Baueinheit können die Lenksäule dabei zumindest partiell umgreifen.

Die Erfindung wird im folgenden anhand von Figuren näher erläutert.

Es zeigen:
Figur 1a und 1b jeweils eine schematische Darstellung von Ausführungsbeispielen des Lenksäulenmodules,
Figur 2 eine Explosionsdarstellung eines beispielhaft dargestellten Lenksäulenmodules.

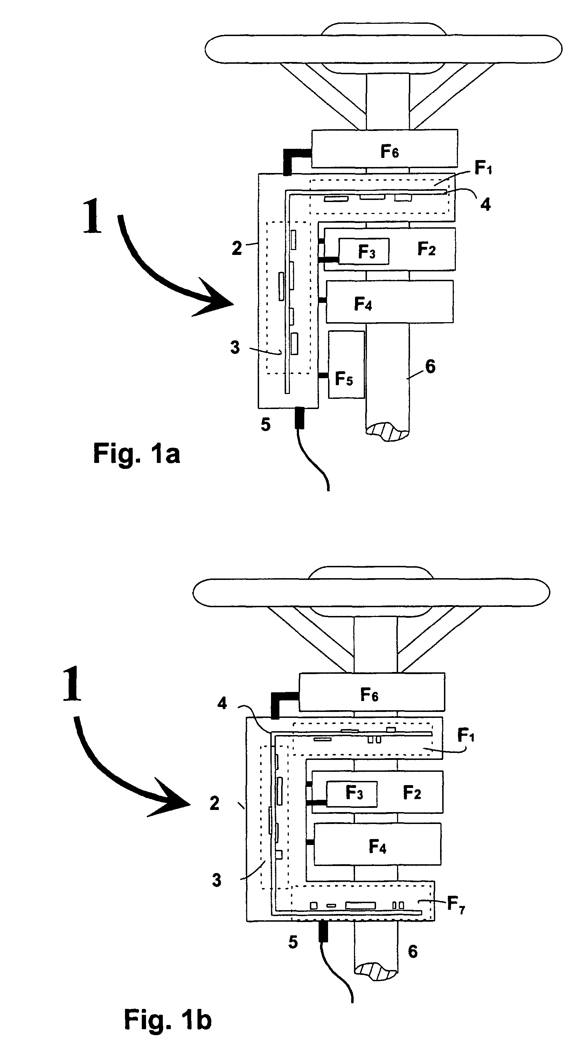

**Figur 1a** stellt eine schematisierte Darstellung einer Ausführung des Lenksäulenmodules **1** dar, welches sich modular aus mehreren separaten Funktionseinheiten **F**_{**2**}**...F**_{**6**} und der in einer untrennbaren Baueinheit **2** integrierten Elektronikeinheit **3** sowie der ebenfalls darin integrierten Funktionseinheit **F**_{**1**} zusammensetzt. Die zugehörigen elektronischen Komponenten sind dabei auf einem gemeinsamen, einstückigen Substrat **4** angeordnet, welches vorzugsweise als Leiterplatte ausgestaltet ist. Die Baueinheit **2** ist über ein Steckverbinderteil **5** an das Bordnetz angeschlossen. Die Funktionseinheiten sind um die Lenksäule **6** herum gruppiert und können diese auch umgreifen. Ist **F**_{**1**} beispielsweise der Lenkwinkelsensor, so ist es zweckmäßig, daß das die Baueinheit **2** mit seinem die Funktionseinheit **F**_{**1**} enthaltenden Schenkel die Lenksäule vollständig konzentrisch umschließt. Die Kontaktierung der Funktionseinheiten **F**_{**2**}**...F**_{**5**} erfolgt durch Steckverbindungsteile, die eine radiale oder tangentiale Steckrichtung aufweisen. Dazu sind an dem sich parallel zur Lenksäule erstreckenden Schenkel der Baueinheit **2** in radialer oder tangentialer Richtung weisende - hier jedoch aus Gründen der Übersichtlichkeit nicht bezeichnete - Steckverbindungsteile angebracht, welche mit entsprechenden, an den separaten Funktionseinheiten angebrachten Gegen-Steckverbindungsteilen kooperieren. Das die Lenksäule umgreifende Modul **F**_{**6**} ist am oberen Ende des Lenksäulenmodules in diesem Ausführungsbeispiel durch ein Verbindungsteil mit axialer Steckrichtung kontaktiert. Dadurch kann dieses äußere Modul, vorzugsweise eine Wickelfederkassette, beispielsweise zu Wartungs- oder Reparaturzwecken, in axialer Richtung abgezogen werden.

In **Figur 1 b** ist eine weitere Ausführungsform des Lenksäulenmodules dargestellt. In dieser Variante sind die Elektronikeinheit **3** und zwei weitere Funktionseinheiten **F**_{**1**} und **F**_{**7**} in einer Baueinheit **2** integriert.

Die zweite störempfindliche Funktionseinheit **F**_{**7**} kann beispielsweise ein Drehmoment-Sensor sein. Die elektronischen Komponenten dieser Einheiten sind auf einem gemeinsamen Substrat **4** angeordnet, welches sich U-förmig in dem gemeinsamen Gehäuse erstreckt. Die Bauelemente können auf der Ober- und Unterseite des Substrates **4** angeordnet sein.

Die einstückige Ausführung des Substrates **4** ermöglicht kürzeste Leitungswege von der Elektronikeinheit **3** zu den Funktionseinheiten **F**_{**1**}**, F**_{**7**}**,** wobei durch die unlösbare elektrische Verbindung ein hohes Maß an Funktionssicherheit der beiden Funktionseinheiten gewährleistet ist. Der Einsatz von speziellen hochwertigen, beispielsweise Gold plattierten, jedoch auch kostenintensiven Steckverbindungsteilen entfällt.

An dem sich parallel zur Lenksäule **6** erstreckenden, mittleren Teil der Baueinheit **2** sind in radialer oder tangentialer Richtung weisende Steckverbindungselemente angebracht, welche mit entsprechenden, an den separaten Funktionseinheiten angebrachten Gegen-Steckverbindungsteilen kooperieren. Durch die Unterbringung der störempfindlichen Einheiten zusammen mit der Elektronikeinheit in einem gemeinsamen Gehäuse lassen sich in diesem untergebrachte Mittel zur elektrischen Abschirmung, wie beispielsweise Abschirmbleche, oder ein im Gehäuse vorhandener Feuchtigkeitsschutz (z.B. Abdichtmaßnahmen) gemeinsam für die Elektronik- und die Funktionseinheiten nutzen; lange, störempfindliche Leitungswege werden vermieden.

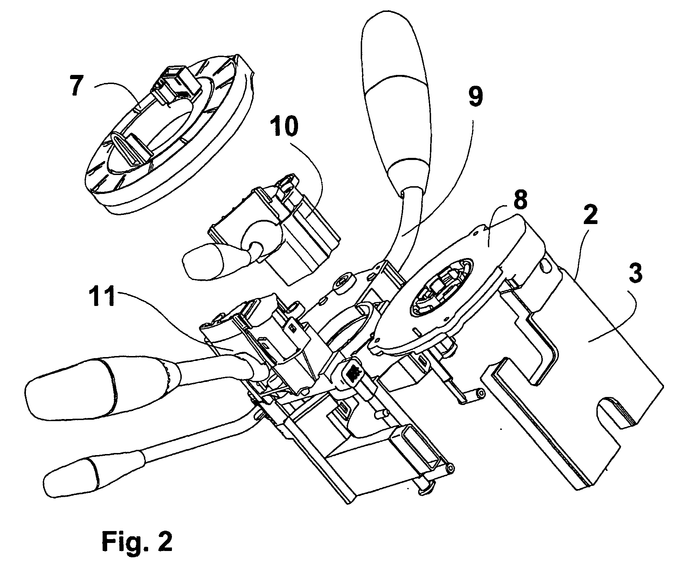

In **Figur 2** ist eine Explosionsdarstellung einer weiteren Ausführungsvariante des Lenksäulenmodules dargestellt.

Dargestellt sind die Wickelfederkassette **7,** die untrennbare Baueinheit **2,** die einen Lenkwinkelsensor 8 und die Elektronikeinheit **3** beinhaltet, eine erste Lenkstockschalter-Einheit **9,** auf der zwei Lenkstockhebel gelagert sind, sowie zwei weitere Lenkstockschalter-Einheiten **10, 11 ,** welche je einen einzelnen Lenkstockhebel tragen.

Die Baueinheit **2** ist im wesentlichen L-förmig ausgestaltet und umgreift mit seinem den Lenkwinkelsensor **8** enthaltenden Schenkel die Lenksäule konzentrisch. Die elektronischen Bauteile des Lenkwinkelsensors **8** und der Elektronikeinheit **3** sind dabei auf einem ebenfalls gewinkelten einstückigen Substrat aufgebaut.

Vorzugsweise enthält der Lenkwinkelsensor **8** eine mit einem digitalen Strichcode versehene, durch ein Beleuchtungselement durchstrahlte Codescheibe und eine CCD-Kamerazeile zur optischen Erfassung des Strichcodes. Vorzugsweise sind im Lenkwinkelsensor ebenfalls Mittel zur Erfassung der Anzahl der vom Lenkrad durchgeführten Umdrehungen vorhanden, etwa eine auf der Codescheibe zusätzlich aufgebrachte, spiralförmige Analogspur, so daß der Verstellbereich des Lenkrades über einen 360° abdeckenden Winkelbereich hinaus erfaßt werden kann, beispielsweise über einen Winkelbereich - ausgehend von der Nullstellung - von etwa ± 720°.

Der die Elektronikeinheit umfassende Schenkel ist parallel zur Lenkachse angeordnet. An der zur Lenksäule weisenden Seite dieses Schenkels sind radial und tangential weisende Steckverbindungsteile angebracht, welche die Elektronikeinheit **3** mit den Lenkstockschalter-Einheiten **9, 10, 11** über an diesen vorhandene Gegen-Steckverbinder kontaktiert.

Aus der Beschreibung der Erfindung werden die Vorteile des beanspruchten Lenksäulenmoduls deutlich, insbesondere im Hinblick auf einen hohes Maß an Betriebssicherheit, ohne daß dabei die Vorteile eines kompakten, modularen Aufbaus aufgegeben werden.

Durch die Integration der Elektronikeinheit und einer störungsempfindlichen Funktionseinheit in ein gemeinsames kompaktes Gehäuse werden lange Leitungswege vermieden, was zur Erhöhung der Betriebssicherheit beiträgt. Elektrische Abschirmmaßnahmen und Abdichtvorkehrungen gegen andere äußere Einflüsse wie Feuchtigkeit, Staub etc. lassen sich für die in der kompakten Baueinheit integrierten Einheiten gemeinsam nutzen. Die unterbrechungsfreie, nicht lösbare elektrische Verbindung von Elektronik- und Funktionseinheit vermeidet unerwünschte Übergangswiderstände dauerhaft und bewirkt dadurch einen weitgehend störungsfreien Betrieb der Funktionseinheit. Durch geeignet angebrachte Steckverbinder können weitere Funktionseinheiten modular an die untrennbare Baueinheit angeschlossen werden. Ferner kann die untrennbare Baueinheit entsprechend der gewünschten Anzahl und Ausbildung der separaten Funktionsmodule bereitgestellt sein. Dabei kann vorgesehen sein, das Gehäuse der Baueinheit gleichbleibend auszugestalten, während sein Inneres - die Elektronik sowie die Steckverbinderteile - den jeweilig gewünschten Verhältnissen angepaßt ist.

## Patentansprüche

1. Lenksäulenmodul (1) für ein Kraftfahrzeug, welches mehrere benachbart angeordnete, jeweils zumindest ein elektrisches Ausgangs- oder Steuersignal liefernde bzw. erfordernde Funktionseinheiten (F₁...F₇) und eine die Ausgangssignale der Funktionseinheiten verarbeitende und/oder miteinander verknüpfende und/oder Steuersignale liefernde, mit dem Bordnetz verbundene Elektronikeinheit (3) aufweist, wobei zumindest eine Funktionseinheit (F₂ -F₆) über daran vorhandene elektrische Steckverbindungsteile mit entsprechend angeordneten, an der Elektronikeinheit (3) befindlichen Gegen-Steckverbindungsteilen verbindbar ist,
wobei zumindest eine der Funktionseinheiten (F₁, F₇) mit der Elektronikeinheit (3) zu einer untrennbaren Baueinheit (2) zusammengefaßt ist,
und wobei die elektrischen Komponenten dieser Funktionseinheit (F₁, F₇) den damit kooperierenden Komponenten der Elektronikeinheit (3) über auf einem Substrat (4) vorhandene elektrische Leiterbahnen unterbrechungsfrei und unlösbar zugeordnet sind,
**dadurch gekennzeichnet,**
**daß** die Baueinheit (2) L-förmig ausgebildet ist, wobei dem einen Schenkel die Komponenten der Elektronikeinheit (3) und dem anderen Schenkel die Komponenten der Funktionseinheit (F₁) zugeordnet sind und wobei das Substrat sich sowohl in dem einen Schenkel als auch in dem anderen Schenkel erstreckt.

2. Lenksäulenmodul (1) für ein Kraftfahrzeug, welches mehrere benachbart angeordnete, jeweils zumindest ein elektrisches Ausgangs- oder Steuersignal liefernde bzw. erfordernde Funktionseinheiten (F₁...F₇) und eine die Ausgangssignale der Funktionseinheiten verarbeitende und/oder miteinander verknüpfende und/oder Steuersignale liefernde, mit dem Bordnetz verbundene Elektronikeinheit (3) aufweist, wobei zumindest eine Funktionseinheit (F₂-F₆) über daran vorhandene elektrische Steckverbindungsteile mit entsprechend angeordneten, an der Elektronikeinheit (3) befindlichen Gegen-Steckverbindungsteilen verbindbar ist,
wobei zumindest eine der Funktionseinheiten (F₁, F₇) mit der Elektronikeinheit (3) zu einer untrennbaren Baueinheit (2) zusammengefaßt ist,
und wobei die elektrischen Komponenten dieser Funktionseinheit (F₁ ,F₇) den damit kooperierenden Komponenten der Elektronikeinheit (3) über auf einem Substrat (4) vorhandene elektrische Leiterbahnen unterbrechungsfrei und unlösbar zugeordnet sind,
**dadurch gekennzeichnet,**
**daß** die Baueinheit (2) U-förmig ausgebildet ist, wobei der mittlere Teil der U-förmigen Baueinheit (2) sich parallel zur Lenksäule erstreckt und die Komponenten der Elektronikeinheit (3) aufnimmt und die beiden anderen Schenkel den Komponenten einer ersten und zweiten Funktionseinheit (F₁, F₇) zugeordnet sind und wobei das Substrat U-förmig ausgebildet ist und sich in beiden Schenkeln sowie dem mittleren Teil erstreckt.

3. Lenksäulenmodul nach Anspruch 1, **dadurch gekennzeichnet, daß** der die Komponenten der Elektronikeinheit (3) aufweisende eine Schenkel der Baueinheit (2) sich parallel zur Längsachse der Lenksäule (6) erstreckt und daß der die Funktionseinheit (F₁) aufweisende andere Schenkel der Baueinheit quer zur Längsachse der Lenksäule (6) ausgerichtet ist.

4. Lenksäulenmodul nach Anspruch 3 , **dadurch gekennzeichnet, daß** der parallel zur Lenksäule sich erstreckende eine Schenkel der untrennbaren Baueinheit (2) sich bezüglich der Steckrichtung radial oder tangential erstreckende Steckverbindungsteile aufweist.

5. Lenksäulenmodul nach einem der Ansprüche 1, 3 oder 4 , **dadurch gekennzeichnet, daß** der die Komponenten der einen Funktionseinheit (F₁) aufweisende andere Schenkel der Baueinheit die Längsachse der Lenksäule (6) zumindest über einen begrenzten Winkelbereich konzentrisch umgibt.

6. Lenksäulenmodul nach Anspruch 2 , **dadurch gekennzeichnet, daß** der parallel zur Lenksäule sich erstreckende mittlere Schenkel der untrennbaren Baueinheit (2) sich bezüglich der Steckrichtung radial oder tangential erstreckende Steckverbindungsteile aufweist.

7. Lenksäulenmodul nach Anspruch 2 oder 6 , **dadurch gekennzeichnet, daß** der eine und/oder der andere Schenkel der Baueinheit (2), welche je eine Funktionseinheit (F₁,F₇) aufnehmen, die Lenksäule (6) zumindest über einen begrenzten Winkelbereich konzentrisch umgreifen.

8. Lenksäulenmodul nach einem der Ansprüche 1 bis 7, **dadurch gekennzeichnet, daß** das den Komponenten der zumindest einen Funktionseinheit und den Komponenten der Elektronikeinheit (3) zugeordnete, Leiterbahnen aufweisende Substrat (4) aus einer sich in den parallel und quer zur Lenksäule (6) angeordneten Teilen der Baueinheit (2) erstreckenden, einstückigen abgewinkelten Leiterplatte besteht.

9. Lenksäulenmodul nach einem der Ansprüche 1 bis 7 , **dadurch gekennzeichnet, daß** das den Komponenten der zumindest einen Funktionseinheit und den Komponenten der Elektronikeinheit (3) zugeordnete Leiterbahnen aufweisende Substrat (4) aus einer sich in den parallel und quer zur Lenksäule (6) angeordneten Teilen der Baueinheit (2) erstreckenden, flexiblen Leiterbahnfolie besteht.

10. Lenksäulenmodul nach Anspruch 9, **dadurch gekennzeichnet, daß** die Leiterbahnfolie zumindest abschnittsweise auf einer in den Schenkeln der Baueinheit (3) vorhandenen Stützkonstruktion festgelegt ist.

11. Lenksäulenmodul nach einem der Ansprüche 1 bis 10, **dadurch gekennzeichnet, daß** die eine Funktionseinheit (F₁) als ein die Drehbewegung des Lenkrades erfassender Lenkwinkelsensor (8) ausgebildet ist.

12. Lenksäulenmodul nach Anspruch 11, **dadurch gekennzeichnet, daß** der Lenkwinkelsensor Mittel zur Erfassung eines über 360° hinausgehenden Verstellbereichs derart aufweist, daß ausgehend von einer Nulllage sowohl zur einen als auch zur anderen Seite hin Winkelbereiche von etwa +720° bis etwa -720° erfaßbar sind.

13. Lenksäulenmodul nach Anspruch 12, **dadurch gekennzeichnet, daß** der Lenkwinkelsensor als ein mit einer CCD-Kamerazeile die Drehbewegung des Lenkrades feststellendes Erfassungssystem ausgebildet ist.

## Claims

1. Steering column module (1) for a motor vehicle featuring several functional units (F₁...F₇) arranged adjacently, each supplying or requiring at least one electrical output or control signal, respectively, and an electronic unit (3) connected to the vehicle electrical system for processing and/or linking the output signals of the functional units and/or supplying control signals to each other, with at least one functional unit (F₂-F₆) capable of being connected by means of electrical plug-in connector elements provided on the same to appropriately arranged mating connector elements provided on the electronic unit (3),
with at least one of the functional units (F₁, F₇) combined with the electronic unit (3) to form an inseparable assembly unit (2),
and with the electrical components of this functional unit (F₁, F₇) uninterruptedly and inseparably allocated to the components of the electronic unit (3) cooperating with the same along electrical conductors provided on a substrate (4),
**characterised by the fact**
that the assembly unit (2) is of an L-shaped design, with the components of the electronic unit (3) being allocated to the one leg and the components of the functional unit (F1) being allocated to the other leg and with the substrate extending both into the one leg and into the other.

2. Steering column module (1) for a motor vehicle featuring several functional units (F₁...F₇) arranged adjacently, each supplying or requiring at least one electrical output or control signal, respectively, and an electronic unit (3) connected to the vehicle electrical system for processing and/or linking the output signals of the functional units and/or supplying control signals to each other, with at least one functional unit (F₂-F₆) capable of being connected by means of electrical plug-in connector elements provided on the same to appropriately arranged mating connector elements provided on the electronic unit (3),
with at least one of the functional units (F₁, F₇) combined with the electronic unit (3) to form an inseparable assembly unit (2),
and with the electrical components of this functional unit (F₁, F₇) uninterruptedly and inseparably allocated to the components of the electronic unit (3) cooperating with the same along electrical conductors provided on a substrate (4),
**characterised by the fact**
that the assembly unit (2) is of a U-shaped design, with the middle section of the U-shaped assembly unit (2) extending parallel to the steering column and the accommodating the components of the electronic unit (3) and the two other legs allocated to the components of a first and second functional unit (F₁, F₇) and with the substrate being of a U-shaped design and extending to the two legs as well as to the middle section.

3. Steering column module according to Claim 1, **characterised by the fact** that the one leg of the assembly unit (2) featuring the components of the electronic unit (3) extends parallel to the longitudinal axis of the steering column (6) and that the other leg of the assembly unit featuring the functional unit (F₁) is aligned crosswise to the longitudinal axis of the steering column (6).

4. Steering column module according to Claim 3, **characterised by the fact** that the one leg of the inseparable assembly unit (2) extending parallel to the steering column features plug-in connector elements extending radially or tangentially in relation to the plug-in direction.

5. Steering column module according to any of Claims 1, 3 or 4, **characterised by the fact** that the other leg of the assembly unit featuring the components of the one functional unit (F₁) encompasses the longitudinal axis of the steering column (6) concentrically, at least over a limited angular range.

6. Steering column module according to Claim 2, **characterised by the fact** that the middle leg of the inseparable assembly unit (2) extending parallel to the steering column features plug-in connector elements extending radially or tangentially in relation to the plug-in direction.

7. Steering column module according to Claim 2 or 6, **characterised by the fact** that the one and/or the other leg of the assembly unit (2), each of which accommodates a functional unit (F₁, F₇), grips concentrically around the steering column (6) at least over a limited angular range.

8. Steering column module according to any of Claims 1 to 7, **characterised by the fact** that the substrate (4) featuring printed conductors and allocated to the components of the at least one functional unit and the components of the electronic unit (3) comprises a one-piece, angled printed board that extends into the components of the assembly unit (2) arranged parallel and crosswise to the steering column (6).

9. Steering column module according to any of Claims 1 to 7, **characterised by the fact** that the substrate (4) featuring printed conductors and allocated to the components of the at least one functional unit and the components of the electronic unit (3) consists of a flexible circuit-board conductor foil that extends into the components of the assembly unit (2) arranged parallel and crosswise to the steering column (6).

10. Steering column module according to Claim 9, **characterised by the fact** that the circuit-board conductor foil is fixed at least section-wise to a support structure provided in the legs of the assembly unit (3).

11. Steering column module according to any of Claims 1 to 10, **characterised by the fact** that the one functional unit (F1) is designed as a steer angle sensor (8) sensing the rotational movement of the steering wheel.

12. Steering column module according to Claim 11, **characterised by the fact** that the steer angle sensor shows properties of a means for sensing an adjustment range extending beyond 360° in such a way that, starting from a zero position, angular ranges of approximately +720° to approximately -720° can be sensed in either direction.

13. Steering column module according to Claim 12, **characterised by the fact** that the steer angle sensor is designed as a sensing system that can determine the rotational movement of the steering wheel with a CCD camera line.

## Revendications

1. Module de colonne de direction (1) pour un véhicule automobile, lequel présente plusieurs unités fonctionnelles (F₁...F₇) voisines délivrant ou exigeant chacune au moins un signal électrique et une unité électronique (3) qui, traitant et / ou enchaînant lesdits signaux de sortie des unités fonctionnelles et / ou délivrant des signaux de commande, est reliée au réseau de bord, une unité fonctionnelle (F₂-F₆) au moins pouvant être reliée, par l'intermédiaire de pièces de connexion enfichables électriques, à des pièces de connexion correspondantes, adéquatement disposées, qui équipe l'unité électronique (3),
l'une des unités fonctionnelles (F₁, F₇), au moins, étant assemblée avec l'unité électronique (3) pour former une unité modulaire (2) indivisible,
et les composants électriques de cette unité fonctionnelle (F₁, F₇) étant associés, sans interruption et de manière inamovible aux composants coopérants de l'unité électronique (3), par l'intermédiaire d'un réseau de circuits électrique, disposé sur un substrat (4),
**caractérisé en ce que** l'unité modulaire (2) est conçue en forme de L, à l'une des branches duquel sont associés les composants de l'unité électronique (3) et à l'autre branche duquel sont associés les composants de l'unité fonctionnelle (F₁) et le substrat s'étendant aussi bien dans l'une des branche que dans l'autre.

2. Module de colonne de direction (1) pour un véhicule automobile, lequel présente plusieurs unités fonctionnelles (F₁...F₇) voisines délivrant ou exigeant chacune au moins un signal électrique et une unité électronique (3) qui, traitant et / ou enchaînant lesdits signaux de sortie des unités fonctionnelles et / ou délivrant des signaux de commande, est reliée au réseau de bord, une unité fonctionnelle (F₂ - F₆) au moins pouvant être reliée, par l'intermédiaire de pièces de connexion enfichables électriques, à des pièces de connexion enfichables correspondantes, adéquatement disposées qui équipe l'unité électronique (3),
l'une des unités fonctionnelles (F₁, F₇), au moins, étant assemblée avec l'unité électronique (3) pour former une unité modulaire (2) indivisible,
et les composants électriques de cette unité fonctionnelle (F₁, F₇) étant associés, sans interruption et de manière inamovible aux composants coopérants de l'unité électronique (3), par l'intermédiaire d'un réseau de circuits électriques, disposé sur un substrat (4),
**caractérisé en ce que** l'unité modulaire (2) est conçue en forme de U, la partie médiane de ladite unité (2) en forme de U étant orientée parallèlement à la colonne de direction et accueillant les composants de l'unité électronique (3) et les deux branches du U étant associées aux composants d'une première et d'une deuxième unités fonctionnelles (F₁, F₇) et le substrat étant conçu en forme de U et s'étendant dans les deux branches ainsi que dans la partie médiane.

3. Module de colonne de direction selon la revendication 1, **caractérisé en ce que** la branche de l'unité modulaire (2) présentant les composants de l'unité électronique (3) est orienté parallèlement à l'axe longitudinal de la colonne de direction (6) et que l'autre branche de l'unité modulaire présentant l'unité fonctionnelle (F₁) est orientée perpendiculairement à l'axe longitudinal de la colonne de direction (6).

4. Module de colonne de direction selon la revendication 3, **caractérisé en ce que** la branche de l'unité modulaire, indivisible (2), s'étendant parallèlement à la colonne de direction, présente des pièces de connexion enfichables, orientées dans le sens radial ou tangentiel, selon le sens d'insertion.

5. Module de colonne de direction selon l'une des revendications 1, 3 ou 4, **caractérisé en ce que** la branche de l'unité modulaire présentant les composants de l'unité fonctionnelle (F1) entoure concentriquement l'axe longitudinal de la colonne de direction (6), au moins sur un secteur angulaire limité.

6. Module de colonne de direction selon la revendication 2, **caractérisé en ce que** la branche médiane de l'unité modulaire indivisible (2), orientée parallèlement à la colonne de direction, présente des pièces de connexion enfichables, orientées dans le sens radial ou tangentiel, selon le sens d'insertion

7. Module de colonne de direction selon la revendication 2 ou 6, **caractérisé en ce que** l'une et / ou l'autre branche de l'unité modulaire (2), accueillant chacune une unité fonctionnelle (F1, F7), embrasse la colonne de direction (6) au moins sur un secteur angulaire limité.

8. Module de colonne de direction selon l'une des revendications 1 à 7, **caractérisé en ce que** le substrat (4), qui présentes le réseau de circuit et est associé aux composants d'au moins une unité fonctionnelle et aux composants de l'unité électronique (3), consiste en une plaquette de circuits imprimés exécutée d'une pièce, en cornière, qui s'étend dans les parties de l'unité modulaire (2), disposées parallèlement et perpendiculairement à la colonne de direction (6).

9. Module de colonne de direction selon l'une des revendications 1 à 7, **caractérisé en ce que** le substrat (4), qui présentes le réseau de circuit et est associé aux composants d'au moins une unité fonctionnelle et aux composants de l'unité électronique (3), consiste en une feuille de circuits flexible qui s'étend dans les parties de l'unité modulaire (2), disposées parallèlement et perpendiculairement à la colonne de direction (6)

10. Module de colonne de direction selon la revendication 9, **caractérisé en ce que** la feuille de circuits est fixée, au moins par secteurs, sur une construction de support qui est prévue dans les branches de l'unité modulaire (3).

11. Module de colonne de direction selon l'une des revendications 1 à 10, **caractérisé en ce qu'**une unité fonctionnelle (F₁) est conçue en tant que capteur d'angle de braquage (8) qui capte le mouvement de rotation du volant.

12. Module de colonne de direction selon la revendication 11, **caractérisé en ce que** le capteur d'angle de braquage présente des moyens de captage d'une zone angulaire de plus de 360° de sorte que, partant de la position zéro, des zones angulaires d'environ +720° à environ -720° puissent être balayées aussi bien d'un côté que de l'autre.

13. Module de colonne de direction selon la revendication 12, **caractérisé en ce que** le capteur d'angle de braquage est conçu sous la forme d'un système d'acquisition qui capte le mouvement de rotation du volant avec un caméra CCD à balayage de ligne.
